# FASCICULE DE BREVET EUROPEEN

(11) **EP 2 033 249 B1**
(45) Date de publication et mention de la délivrance du brevet: **28.08.2013**
(21) Numéro de dépôt: 07766103.1
(22) Date de dépôt: 28.05.2007
(51) Int. Cl.: H01M 8/02, H01M 8/04

(54) **PLAQUE BIPOLAIRE POUR PILE À COMBUSTIBLE, ET PILE À COMBUSTIBLE À DISTRIBUTION DE FLUIDE AMÉLIORÉE METTANT EN OEUVRE DE TELLES PLAQUES**
BRENNSTOFFZELLEN-BIPOLARPLATTE UND SOLCHE PLATTEN VERWENDENDE BRENNSTOFFZELLE MIT VERBESSERTER FLUIDVERTEILUNG
FUEL CELL BIPOLAR PLATE AND FUEL CELL WITH IMPROVED FLUID DISTRIBUTION EMPLOYING SUCH PLATES

(30) Priorité: 21.06.2006 FR 0652579
(43) Date de publication de la demande: 11.03.2009
(73) Titulaire: Commissariat à l'Énergie Atomique et aux Énergies Alternatives, 75015 Paris (FR)
(72) Inventeur: MADELEINE, Sylvain, 38000 Grenoble (FR); MANICARDI, Philippe, 38600 Fontaine (FR); POIROT-CROUVEZIER, Jean-Philippe, 38450 Saint Georges De Commiers (FR)
(74) Mandataire: Vuillermoz, Bruno
(86) Numéro de dépôt international: PCT/FR2007/051335
(87) Numéro de publication internationale: WO 2007/147991

(56) Documents cités:
- WO-A-2006/090621
- DE-A1-102004 057 447
- JP-A- 2002 298 872
- US-A1- 2005 271 910
- US-A1- 2005 277 013

## Description

### DOMAINE DE L'INVENTION

La présente invention se rattache au domaine des piles à combustible, en particulier au domaine des piles à combustible composées d'une superposition de cellules élémentaires analogues. Plus particulièrement, la présente invention concerne une plaque bipolaire pour former de telles cellules élémentaires. Elle concerne également les piles à combustibles mettant en oeuvre de telles plaques.

### ETAT ANTERIEUR DE LA TECHNIQUE

Une pile à combustible peut être composée d'une superposition ou d'un empilement de plusieurs cellules élémentaires de dimensions correspondantes. Chacune de ces cellules élémentaires comprend généralement un électrolyte sous forme de membrane, et une plaque bipolaire présentant une anode et une cathode.

Afin de provoquer une oxydation et une réduction, destinées à générer l'émission de porteurs de charges, il faut amener respectivement un combustible et un comburant au contact de ces électrodes. Les réactions électrochimiques d'oxydation et de réduction libèrent ainsi des ions, dont le déplacement produit le courant électrique délivré par la pile à combustible. En général, le combustible et le comburant se présentent sous forme de fluides, c'est-à-dire sous forme de liquides ou sous forme de gaz.

De manière connue, une plaque bipolaire présente deux faces principales. Au niveau de l'une de ces deux faces principales, une plaque bipolaire comprend un compartiment anodique s'étendant sur une partie substantielle de cette superficie. De manière relativement symétrique, au niveau de l'autre face principale, une plaque bipolaire comprend un compartiment cathodique s'étendant sur une partie substantielle de la superficie de cette face principale. C'est au niveau de ces compartiments que se produisent les demi-réactions, respectivement d'oxydation et de réduction, lorsque les deux faces de la plaque bipolaire sont en contact avec des électrolytes sous forme de membranes.

Une cellule élémentaire est donc composée d'une plaque bipolaire superposée à un électrolyte membranaire. Dans l'empilement de cellules élémentaires formant la pile à combustible, on trouve donc alternativement des plaques bipolaires et des membranes comprenant l'électrolyte.

Comme exemple de telles piles, on peut citer les piles à combustible à membrane échangeuse de protons dites PEMFC (de l'anglais « *Proton Exchange Membrane Fuel Cell* ») et les piles à combustible au méthanol direct dites DMFC (de l'anglais « *Direct Methanol Fuel Cell* »).

Au cours du fonctionnement de la pile, on introduit le comburant et le combustible sous forme de fluide et de manière continue, pour entretenir la réaction électrochimique produisant le courant électrique voulu.

En présence du combustible, il se produit une demi-réaction d'oxydation à l'interface entre le compartiment anodique et l'électrolyte membranaire. En général le combustible introduit, jouant le rôle de réducteur, est constitué par du dihydrogène (H₂) à l'état gazeux. Parallèlement, en présence du comburant, il se produit une demi-réaction de réduction à l'interface entre le compartiment cathodique et l'électrolyte membranaire. En général le comburant introduit, jouant le rôle d'oxydant, est du dioxygène (O₂) à l'état gazeux, qui est souvent introduit sous forme d'air.

Pour assurer un bon fonctionnement et un rendement satisfaisant d'une pile à combustible constituée d'une superposition de cellules élémentaires, l'architecture de la pile doit permettre de remplir un certain nombre de fonctions parmi lesquelles on peut citer :
- l'adduction et la distribution des fluides réactifs,
- l'étanchéité des circuits de fluides,
- le refroidissement ou l'évacuation des produits issus des réactions électrochimiques, l'évacuation de la chaleur dégagée par les réactions électrochimiques qui sont exothermiques,
- la conduction des porteurs de charges électriques libérés au cours de ces réactions,
- ainsi que la cohésion mécanique de l'empilement que forment les cellules élémentaires.

Ces différentes fonctions influent sur la structure des cellules élémentaires et notamment sur celle des plaques bipolaires qui les constituent.

Pour amener les fluides réactifs, comburant et/ou combustible, au contact avec les compartiments anodiques et cathodiques de chaque cellule élémentaire, il est connu de faire circuler chacun de ces fluides dans un collecteur formé tout le long de la pile à combustible par la superposition d'orifices traversant chaque cellule élémentaire, c'est-à-dire plaque bipolaire et électrolyte membranaire.

Ainsi, chaque plaque bipolaire est traversée de part en part par un orifice s'étendant généralement dans une direction perpendiculaire aux deux faces principales de la plaque, qui est le plus souvent plane. L'orifice traversant la plaque bipolaire est généralement réalisé au niveau d'un bord périphérique de la plaque bipolaire, tandis que les compartiments anodique et cathodique occupent la partie centrale de chacune des faces de la plaque bipolaire. Comme l'orifice traversant formant collecteur commun se trouve à une certaine distance du compartiment, anodique ou cathodique, qu'il est destiné à alimenter en fluide réactif, il faut en outre usiner dans la plaque bipolaire un canal d'adduction du fluide réactif depuis le collecteur jusqu'à l'électrode.

Pour cela, une première solution consiste à percer un orifice reliant l'électrode à alimenter à la tranche de la plaque bipolaire située à proximité de l'orifice traversant formant le collecteur. Un tel perçage est généralement effectué selon une direction perpendiculaire à la tranche dans laquelle il prend son origine et donc perpendiculairement à l'orifice traversant formant le collecteur. Puis, on vient insérer un bouchon étanche entre le collecteur et la tranche de la plaque bipolaire, de manière à éviter les fuites de fluides réactifs. Un tel bouchon peut être fixé par emmanchement ou par collage.

Cependant, ces opérations de perçage et de collage sont relativement fastidieuses à effectuer et la présence de bouchon n'exclut pas absolument tout risque de fuite. Ces risques et le surcoût représenté par ces opérations sont d'autant plus importants que les cellules élémentaires composant la pile à combustible sont nombreuses.

Alternativement, une solution de l'art antérieur consiste à réaliser un perçage oblique entre le collecteur et le compartiment à alimenter. Pour permettre l'accès à l'outil de perçage, le point de départ d'un tel perçage se trouve situé vers l'une des extrémités de l'orifice formant le collecteur commun. Avec une telle structure, il n'est plus nécessaire d'insérer des bouchons dans la plaque bipolaire, puisque le canal d'adduction oblique débouche dans le collecteur et non à l'extérieur de la plaque bipolaire, ce qui exclut alors les risques de fuite.

Néanmoins, cette solution n'est pas entièrement satisfaisante, car le perçage des canaux d'adduction obliques nécessite une grande précision et l'emploi d'un outillage spécifique. Or ces deux inconvénients sont également de nature à engendrer un coût supplémentaire dans la fabrication d'une plaque bipolaire.

En outre, l'une et l'autre de ces deux solutions de l'art antérieur sont incompatibles avec une réduction du volume occupé par une pile à combustible, car elles ne peuvent pas être mises en oeuvre sur des plaques bipolaires fines. Par conséquent, ces solutions représentent une limite à la compacité d'une pile à combustible. Or la compacité est un critère de performance important pour une pile à combustible.

Le document JP-A-2002 298872 divulgue une plaque bipolaire pour pile à combustible dont l'un des bords est traversé par deux orifices traversants voisins dont l'un débouche sur une rainure. Toutefois, ce document concerne une plaque bipolaire dont une seule des faces est fonctionnalisée.

La présente invention a donc pour objectif de proposer une plaque bipolaire ne présentant pas de risque pour l'étanchéité de la pile à combustible, dont la géométrie ne limite pas la compacité de la pile et dont la fabrication n'obère pas le coût de la pile de façon substantielle.

### OBJET DE L'INVENTION

L'objet de la présente invention concerne donc une pile à combustible comprennant une superposition de cellules élémentaires, chacune des cellules comprennant une plaque bipolaire de structure simple, de fabrication économique, favorable à l'étanchéité de la pile et propice à la réduction de son volume.

La présente invention concerne une plaque bipolaire pour pile à combustible comprenant :
- un premier orifice traversant positionné au sein de l'un des ses bords périphériques destiné à la circulation de fluide réactif;
- un compartiment anodique s'étendant au niveau de l'une de ses deux faces principales ;
- et un compartiment cathodique s'étendant au niveau de la face principale opposée.

Selon l'invention, l'un au moins de ces compartiments est formé totalement ou partiellement par une région en creux par rapport à la face principale correspondante, cette région en creux étant reliée à l'orifice traversant par l'intermédiaire d'un canal d'adduction du fluide réactif au niveau du compartiment, ce canal d'adduction étant ménagé en creux au sein du bord périphérique de la face principale correspondante.

Selon l'invention, la plaque bipolaire comprend en outre un deuxième orifice traversant situé à proximité du premier orifice traversant, ce deuxième orifice traversant étant également destiné à la circulation du fluide réactif, la face principale opposée à la face logeant la région en creux comportant une rainure globalement non débouchante ménagée en creux, cette rainure étant apte à relier les premier et le deuxième orifices traversants.

En d'autres termes, l'un des bords de la plaque est traversé par deux orifices traversants voisins, dont l'un forme le collecteur de fluide réactif, et dont l'autre débouche dans une rainure ouverte menant au compartiment à alimenter en fluide réactif. Ainsi, le fluide réactif peut circuler du collecteur vers le compartiment à alimenter en passant par une rainure ménagée sur la face opposée à ce compartiment. Le fluide suit donc un parcours globalement en « U » dans un plan transversal au bord de la plaque avant de déboucher dans le compartiment formant l'électrode.

Selon une forme de réalisation pratique de ce premier mode de réalisation de l'invention, la plaque bipolaire peut présenter un axe médian, le premier orifice traversant étant percé selon cet axe médian.

Ainsi, dans l'empilement formant la pile à combustible, il est possible de superposer les plaques bipolaires alternativement dans un sens puis dans l'autre, de manière à orienter en sens opposé leurs rainures globalement non débouchantes. Cela permet de distribuer le fluide réactif alternativement à gauche puis à droite du collecteur. Par conséquent, le positionnement de chaque cellule élémentaire à 180° de celle qui la précède dans l'empilement permet d'assurer une étanchéité parfaite des canaux d'adduction et des compartiments irrigués au moyen d'un simple joint intercellulaire.

En pratique, les compartiments peuvent couvrir une superficie substantielle respectivement de chacune des faces principales. De tels compartiments présentent ainsi une surface d'échange importante avec l'électrolyte membranaire, ce qui permet de générer un courant électrique élevé.

De manière pratique également, le premier et/ou le deuxième orifice(s) traversant(s) peu(ven)t présenter une forme de cylindre à base circulaire, dont l'axe est perpendiculaire au plan défini par l'une des faces principales.

Un tel orifice traversant est en effet très simple à réaliser au moyen d'une seule opération de perçage de la plaque bipolaire.

Selon une forme de réalisation alternative de l'invention, la plaque bipolaire peut en outre comprendre un deuxième ensemble d'orifices traversants pour la circulation d'un deuxième fluide réactif, et un troisième ensemble d'orifices traversants pour la circulation d'un fluide de refroidissement.

De tels orifices traversants permettent, à l'instar du premier orifice traversant, de former chacun un collecteur pour ce deuxième fluide réactif et pour ce fluide de refroidissement.

Par ailleurs, l'invention concerne aussi une pile à combustible comprenant une superposition de cellules élémentaires comprenant chacune une plaque bipolaire telle qu'exposée ci-dessus. Selon l'invention, les plaques bipolaires sont séparées deux à deux respectivement par un joint d'étanchéité globalement plan, chacun de ces joints d'étanchéité comprenant un électrolyte membranaire et des orifices traversants au niveau du bord périphérique du joint d'étanchéité. De plus, les orifices traversants des plaques bipolaires superposées et les orifices traversants de tous lesdits joints d'étanchéité coïncident de manière à former un collecteur de fluide réactif commun à toutes les cellules élémentaires.

Autrement dit, la superposition des orifices traversants ménagés dans chacune des plaques bipolaires conformes à l'invention permet de former un collecteur commun à toutes ces plaques, lequel s'étend ainsi le long de la pile à combustible.

Selon une forme de réalisation pratique de l'invention, la pile à combustible comprend une superposition de cellules élémentaires, formées de plaques selon la forme de réalisation alternative de l'invention exposée ci-dessus, les orifices traversants des plaques bipolaires superposées et les orifices traversants de tous les joints d'étanchéité coïncidant de manière à former des deuxième et troisième collecteurs de fluide communs à toutes les cellules élémentaires.

L'invention concerne également une pile à combustible comprenant une superposition de cellules élémentaires du type précité, ladite superposition présentant un empilement tête-bêche des plaques bipolaires.

### BREVE DESCRIPTION DES FIGURES

La manière dont l'invention peut être réalisée et les avantages qui en découlent ressortiront aussi de l'exemple de réalisation qui suit, donné à titre indicatif et non limitatif, à l'appui des figures annexées.
Les figures 1A et 1B sont des représentations schématiques en perspective d'une plaque bipolaire conforme à une première forme de réalisation de l'invention, la figure 1A présentant l'une des faces principales de cette plaque bipolaire, tandis que la figure 1B présente l'autre face principale.
La figure 2 est une représentation schématique en perspective d'un joint intercellulaire intercalé entre deux plaques bipolaires conformes à l'invention.
La figure 3 est une représentation schématique en section et en perspective d'une pile à combustible conforme à une forme de réalisation de la pile à combustible objet de l'invention.
La figure 4 est une représentation schématique en section et en perspective de la pile à combustible de la figure 3 selon un plan de coupe situé plus en avant.
Les figures 5 et 6 sont des représentations schématiques vue du dessus d'une plaque bipolaire selon une deuxième et une troisième formes de réalisation de l'invention.

### MODE DE REALISATION DE L'INVENTION

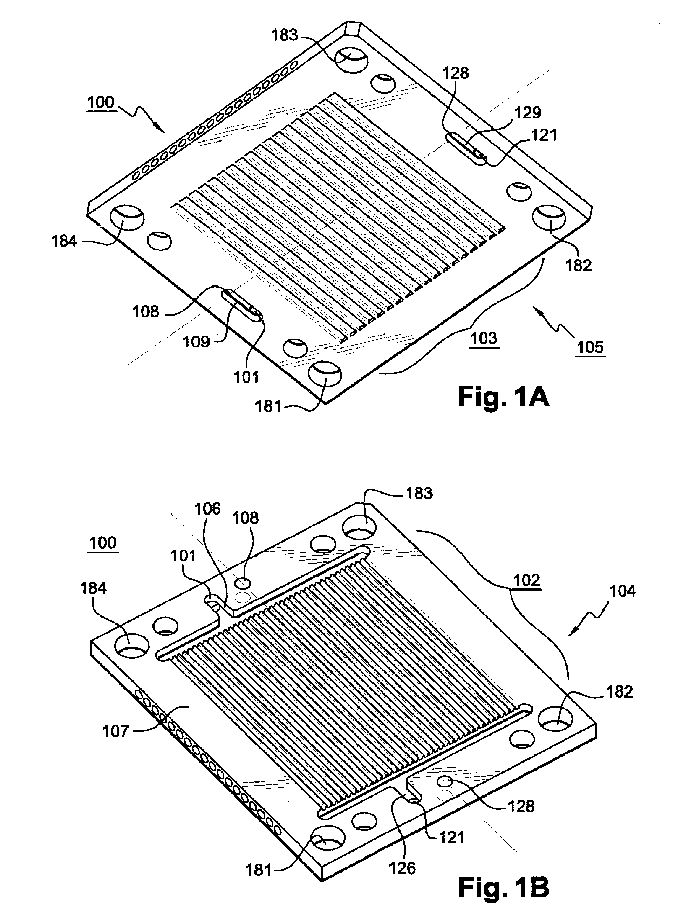

La figure 1A illustre une plaque bipolaire **100** conforme à une première forme de réalisation de l'invention. La plaque bipolaire **100** présente deux faces principales **104, 105** sur lesquelles s'étendent respectivement un compartiment cathodique **102** et anodique **103.** Les faces **104** et **105** de la plaque bipolaire **100** sont dites principales car elles présentent une superficie élevée relativement aux faces formant la tranche de la plaque bipolaire **100** et car elles logent la plupart des organes fonctionnels de la plaque bipolaire **100.**

Comme le montrent les figures 1A et 1B, les compartiments cathodique **102** et anodique **103** couvrent respectivement une superficie substantielle des deux faces principales **104** et **105.** En outre, ces électrodes sont formées d'une pluralité de lignes rainurées parallèles, de manière à présenter une importante surface d'échange avec l'électrolyte sous forme de membrane qui vient à leur contact. En section transversale, ces lignes rainurées présentent donc un profil de créneaux.

De plus, au moins dans le cas du compartiment cathodique **102,** ces lignes rainurées de profondeur déterminée forment autant de canaux permettant la circulation d'un fluide réactif nécessaire à la demi-réaction électrochimique destinée à libérer des porteurs de charge.

Ainsi, le compartiment cathodique **102** est formé par une région qui se trouve en creux par rapport à la face principale **104.** De plus, le sommet des lignes rainurées du compartiment cathodique **102** se trouve au niveau du bord périphérique **107** qui entoure le compartiment cathodique **102.** Cette caractéristique provient du mode de réalisation des rainures du compartiment cathodique **102,** lequel consiste à usiner une plaque plane pour en ôter de la matière ou à l'emboutir. Cela évite en outre de surdimensionner l'épaisseur du joint périphérique qui assure l'étanchéité entre deux plaques bipolaires **100** successives. En effet, si les sommets des lignes rainurées formaient une saillie par rapport au niveau du bord périphérique **107,** il conviendrait de prévoir un joint de forte épaisseur pour assurer l'étanchéité vis-à-vis des fluides.

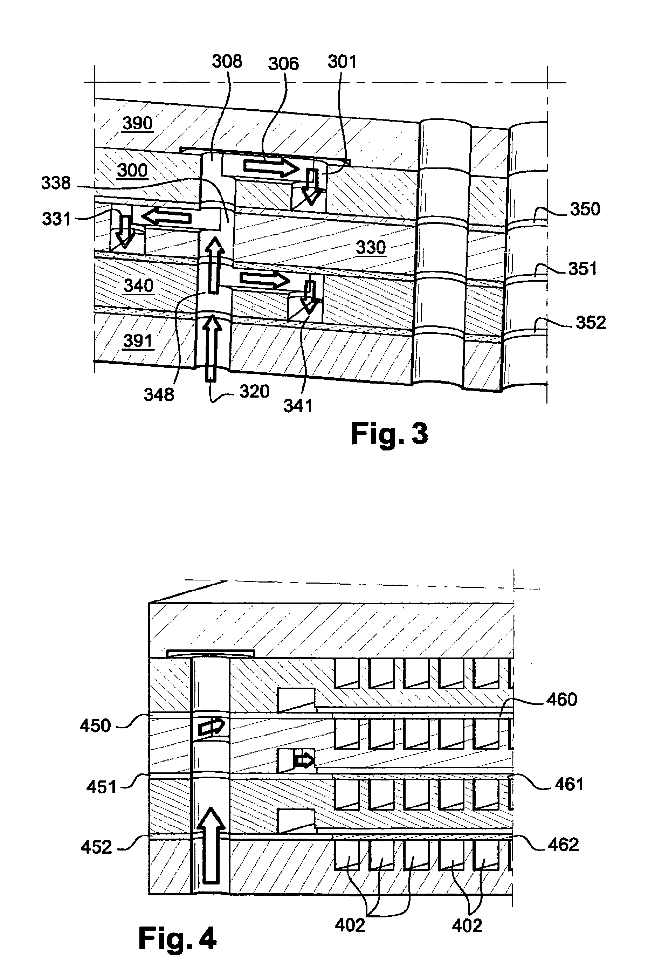

Conformément à l'invention, la plaque bipolaire **100** comporte un premier orifice traversant **108,** destiné à la circulation de fluides réactifs. En effet, lorsque plusieurs cellules élémentaires comprenant des plaques bipolaires analogues sont superposées les unes aux autres pour former une pile à combustible, les orifices traversants correspondant à l'orifice **108,** qui se trouvent sur chacune des plaques bipolaires, coïncident et forment ainsi un collecteur commun, comme le montrent les figures 3 et 4 qui seront détaillées ci-après.

Selon une autre caractéristique de la plaque bipolaire - objet de la présente invention - la région en creux qui forme le compartiment cathodique **102** est reliée à l'orifice traversant **101** par l'intermédiaire d'un canal d'adduction **106** pour l'alimentation en fluide réactif. Le canal **106** est ménagé en creux au sein du bord périphérique **107** de la face principale **104.** Ainsi, tout ou partie du fluide réactif arrivant par l'orifice traversant **101** formant collecteur commun passe ou est dérivé au sein du canal d'adduction **106** jusqu'aux lignes rainurées formant le compartiment cathodique **102.**

Par ailleurs, la plaque bipolaire **100** présente d'autres orifices traversants destinés à remplir des fonctions diverses. Ainsi, les orifices **181-184** servent à loger chacun des moyens de serrage (non représentés), destinés à assurer la cohésion de l'empilement des plaques bipolaires formant la pile à combustible.

La variante de réalisation illustrée par les figures 1A et 1B présente un parcours en « U » du fluide réactif. Ainsi, selon cette variante, le collecteur commun est formé par la superposition des orifices traversants **108** de chaque plaque bipolaire, reliés aux orifices traversants **101** par l'intermédiaire d'une rainure **109** pour alimenter la zone **102** en fluide réactif à travers le canal **106.**

Pour cela, chaque plaque bipolaire **100** comprend donc un deuxième orifice traversant **101,** également destiné à la circulation du fluide réactif, et ménagé à proximité du premier orifice traversant **108,** donc également sur le bord périphérique **107.**

Par conséquent, lorsque les cellules élémentaires (plaques bipolaires et joints intercalaires) sont empilées, comme l'illustrent les figures 3 et 4 décrites ci-après, tous les orifices de type **108** coïncident pour former le collecteur commun destiné à la circulation d'un fluide réactif.

Pour permettre la circulation du fluide réactif depuis l'orifice traversant **108** jusqu'au compartiment cathodique ménagé en creux **102** par l'intermédiaire du canal d'adduction **106,** il est donc prévu une rainure **109** globalement non débouchante, ménagée sur le bord périphérique **107** de la face principale **105** opposée à la face logeant le compartiment cathodique **102.** La rainure **109** est usinée en creux dans la plaque bipolaire **100** et elle est positionnée et dimensionnée en correspondance avec la position des orifices traversants **101** et **108.**

Ainsi, lorsque l'on empile deux plaques bipolaires successives avec leurs faces principales **104** et **105** en regard, la rainure **109** se trouve au droit des orifices traversants **101** et **108.** Dans l'exemple des figures 1A et 1B, la rainure présente une forme rectiligne et sa longueur est telle que les orifices **101** et **108** la traversent en chacune de ses deux extrémités. Néanmoins, d'autres formes de rainures **109** sont possibles avec d'autres positions des orifices relativement à la rainure sans pour autant sortir du cadre de cette invention. Ainsi, La rainure **109** pourrait présenter la forme d'un «L» ou d'un «C» etc.

Dans une telle structure, le fluide réactif traverse donc l'orifice **108** formant collecteur commun, et il est en partie dérivé dans la rainure **109,** puis cette dérivation du fluide réactif débouche dans le canal d'adduction **106** d'où il se répand au sein du compartiment cathodique **102.**

De manière analogue et symétrique, le bord périphérique peut loger, de l'autre coté du compartiment cathodique **102,** un premier orifice traversant **121** coopérant avec un canal d'adduction **126.**

En outre, dans l'exemple des figures 1A et 1B, la plaque bipolaire **100** comprend un deuxième orifice traversant **128** symétrique à l'orifice traversant **108** apte à coopérer avec une rainure globalement non débouchante **129,** similaire à la rainure **109.** Le deuxième collecteur commun formé par l'empilement d'orifices traversants **128** peut servir à amener ou à évacuer le fluide réactif, ou comburant, vers ou depuis le compartiment cathodique **102.**

Pour faire circuler d'autres fluides, par exemple un deuxième fluide réactif ou un fluide de refroidissement, il est possible de reproduire, en d'autres emplacements de la plaque bipolaire, le système composé de deux orifices traversants coopérant avec un canal d'adduction.

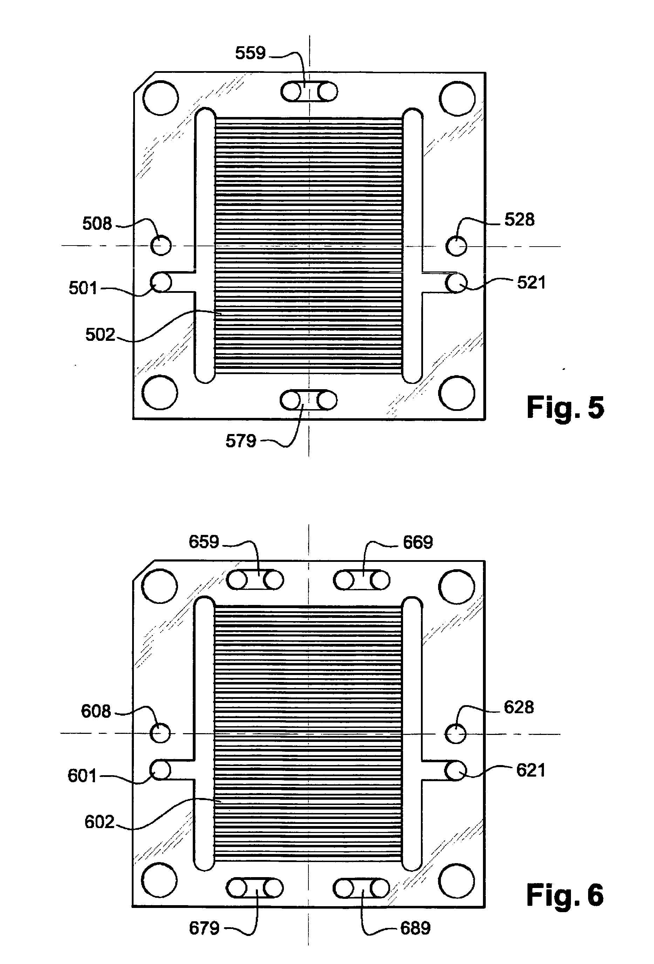

Ainsi, selon les formes de réalisation de l'invention illustrées par les figures 5 et 6, des deuxième et troisième ensembles usinés oblongs **559, 579 ; 659, 679, 669** et **689** sont prévus pour la circulation d'autres fluides, tels qu'un deuxième fluide réactif. A l'instar des ensembles usinés **109** et **129** illustrés sur la figure 1A, les deuxième et troisième ensembles usinés oblongs **559, 579 ; 659, 679, 669** et **689** comportent deux orifices débouchants circulaires qui permettent la circulation des fluides selon un parcours en « U ». Ces orifices débouchants circulaires peuvent être réalisés comme les orifices **501, 508, 521, 528 ; 601, 608, 621, 628** formant le premier ensemble d'orifices débouchants, prévu pour alimenter les électrodes **502, 602.**

Comme dans le cas de la figure 5, le deuxième ensemble d'orifices débouchants **559, 579** peut être positionné sur l'axe perpendiculaire à l'axe du premier ensemble **109, 129.** Ainsi, par symétrie, l'empilement de plaques bipolaires permet de faire correspondre les orifices débouchants de manière à définir un collecteur commun pour toute la pile à combustible.

Dans le cas où l'on souhaite faire circuler un troisième fluide (figure 6), tel qu'un fluide de refroidissement, les deuxième **659, 679** et troisième **669** et **689** ensembles d'orifices débouchants peuvent être positionnés symétriquement par rapport à un axe de symétrie et à équidistance de l'autre axe de symétrie de la plaque bipolaire, comme le montre la figure 6. Cela permet d'assurer la coopération des orifices traversants de deux plaques bipolaires empilées au sein d'une pile à combustible.

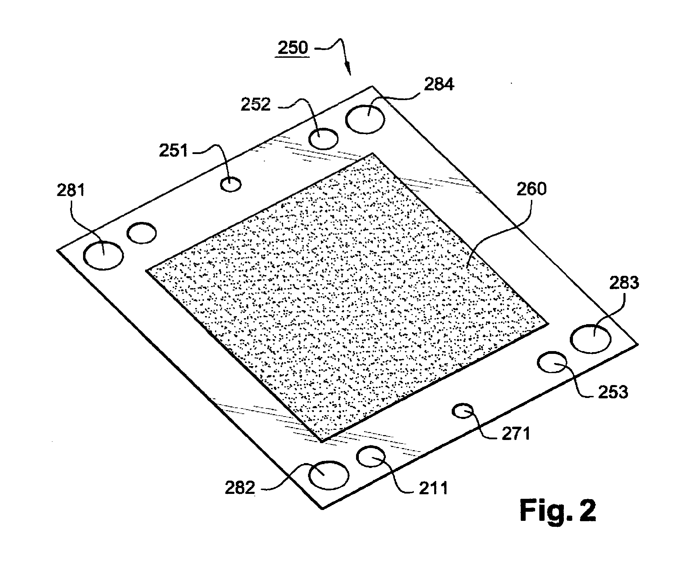

La figure 2 représente la pièce complémentaire aux plaques **100** pour former une cellule élémentaire, à savoir un joint intercalaire **250** destiné à être placé entre deux plaques bipolaires **100** successives. Le joint intercalaire **250** est placé de façon à mettre en contact la zone électrolytique membranaire **260** avec le compartiment cathodique **102** d'une plaque bipolaire **100,** et avec le compartiment anodique **103** de la plaque bipolaire suivante. Pour maximiser les échanges à l'interface entre électrolyte et électrode, l'électrolyte membranaire **260** présente une superficie semblable et correspondante, à la surface occupée par les compartiments cathodiques **102** et anodiques **103.**

De plus, le joint intercalaire **250** présente des orifices traversants **251** et **271,** dont les positions et les dimensions correspondent respectivement à celles des orifices **108** et **128** traversant les plaques bipolaires de type **100.** Ainsi, le comburant peut circuler sans obstacle le long des collecteurs communs formés par les empilements des orifices de type **108** et **128.**

Par ailleurs, les joints intercalaires **250** présentent d'autres orifices traversants **211, 252, 253, 281-284,** dont les positions, dimensions et fonctions correspondent à celles des orifices **181-184** traversant la plaque bipolaire illustrée par la figure 1, à savoir des orifices pour permettre le centrage lors de l'empilement des plaques.

La figure 3 représente un empilement de plaques bipolaires **300, 330, 340,** correspondant à la variante illustrée par la plaque bipolaire **100** des figures 1A et 1B, avec des joints intercalaires **350, 351** et **352** correspondant à la forme de réalisation du joint intercalaire **250.**

Conformément à la variante de réalisation décrite en relation avec les figures 1A et 1B, chacune des plaques bipolaires **300, 330** et **340** présente un premier orifice traversant **301** analogue au premier orifice traversant **101,** ainsi qu'un deuxième orifice traversant **308** analogue au deuxième orifice traversant **108.**

De plus, les plaques bipolaires, **300, 330** et **340** présentent chacune un canal d'adduction **306** analogue au canal d'adduction **106.** Ainsi, le fluide réactif peut circuler dans le collecteur commun formé par les orifices traversants **308,** puis dans les canaux d'adduction de type **306,** d'où il se répand dans l'orifice **301** et surtout dans le compartiment anodique (non représenté sur la figure 3). Le fluide réactif décrit ainsi un parcours en « U » avant de s'engager dans l'électrode à alimenter.

L'empilement de plaques bipolaires **300, 330** et **340** illustré par la figure 3 a ceci de particulier que les plaques sont montées avec leurs canaux d'adduction placés alternativement à droite et à gauche du collecteur commun. Pour cela, conformément à l'une des formes de réalisation de l'invention, les orifices traversants **308, 338** et **348** formant le collecteur commun, doivent être positionnés respectivement sur l'un des axes médians de leur plaque bipolaire. Celle-ci présente alors une symétrie permettant un empilement tête-bêche des plaques bipolaires, comme illustré sur la figure 3.

Avec un tel montage, les orifices traversants **301, 331** et **341** ne coïncident pas les uns avec les autres, si bien qu'ils ne forment pas un deuxième collecteur commun parallèle au collecteur formé par les orifices **308.** Une telle construction permet d'assurer une distribution efficace et étanche du fluide réactif vers les compartiments cathodiques de chacune des plaques bipolaires de l'empilement. De plus, la réalisation de l'assemblage des plaques bipolaires est plus simple. Par ailleurs, les plaques bipolaires peuvent être plus fines que celles de l'art antérieur, ce qui permet d'obtenir des piles plus denses.

Comme on le voit sur la figure 3, les joints intercalaires **350-352** sont disposés entre les plaques bipolaires successives **300, 330, 340,** de manière à faire coïncider les orifices qui les traversent avec ceux traversant les plaques bipolaires. Ainsi, il est possible de faire passer à travers l'ensemble de la pile à combustible les fluides réactifs, combustibles et comburants, un ou des fluide(s) de refroidissement, ainsi que des moyens de serrage pour assurer la cohésion de la pile à combustible.

Par ailleurs, la pile à combustible illustrée par la figure 3 présente deux plaques terminales **390** et **391** situées à chaque extrémité de l'empilement de plaques bipolaires **300, 330** et **340.** Les plaques terminales **390, 391** sont réalisées, de manière connue, pour remplir les fonctions qui leur sont dévolues. L'empilement de cellules élémentaires, plaques bipolaires et joints intercalaires, représenté sur la figure 3 comprend donc trois plaques bipolaires **300, 330, 340,** mais il pourrait en comprendre un nombre différent, en fonction de la puissance souhaitée pour la pile à combustible.

La figure 4 représente une vue en section analogue à celle de la figure 3, dont le plan de coupe se situe légèrement en avant par rapport au plan de coupe de la figure 3. Sur la figure 4, outre les orifices traversants et les canaux d'adduction des plaques bipolaires, on distingue les zones électrolytiques **460-462** associées aux membranes formant les joints intercalaires **450-452.**

Comme on peut le voir sur la figure 4, les électrolytes membranaires **460-462** couvrent donc de manière ajustée les surfaces occupées par les compartiments cathodiques, dont on voit en coupe les lignes rainurées **402** (en créneaux). Ainsi, le fluide réactif ne peut provoquer de réactions qu'au niveau des zones **460-462** et pas au niveau des canaux d'adduction des plaques bipolaires. Cette disposition permet d'optimiser le rendement des réactions cathodiques et la collecte des porteurs de charge qu'elles libèrent.

Le mode particulier de réalisation de l'invention décrit en relation avec les figures concernent les compartiments cathodiques des plaques bipolaires. Néanmoins on peut prévoir une construction et un fonctionnement similaire pour les compartiments anodiques. De telles réalisations permettent ainsi, moyennant quelques opérations d'usinage et/ou d'emboutissage, de former des systèmes d'adduction de fluides étanches, y compris dans des plaques bipolaires relativement fines.

Dans l'exemple des figures, les orifices traversants présentent la forme de cylindres à base circulaire. Toutefois ils pourraient présenter une section différente, par exemple oblongue ou carrée, sans pour autant sortir du cadre de cette invention. De même, l'épaisseur des plaques bipolaires, la longueur et la profondeur des lignes rainurées des compartiments anodiques et cathodiques, les diamètres des orifices et les rainures et canaux d'adduction sont dimensionnés, en tant que de besoin, en fonction de la puissance électrique et des rendements électrochimiques souhaités pour la pile à combustible. En outre, la plaque bipolaire pourrait, selon les applications recherchées, présenter une section non carrée, par exemple circulaire etc.

## Revendications

1. Pile à combustible comprenant une superposition de cellules élémentaires, chacune des cellules élémentaires comprenant une plaque bipolaire (100) elle-même comprenant :
- un premier orifice traversant (108, 128), positionné au sein de l'un de ses bords périphériques (107), destiné à la circulation de fluide réactif (320),
- un compartiment anodique (103) s'étendant au niveau de l'une des deux faces principales (105) de ladite plaque, et un compartiment cathodique (102) s'étendant au niveau de la face principale opposée (104), l'un au moins desdits compartiments (102) étant formé totalement ou partiellement par une région en creux par rapport à la face principale (104) correspondante, ladite région en creux étant reliée à l'orifice traversant (108, 128) par l'intermédiaire d'un canal d'adduction (106, 126) du fluide réactif au niveau dudit compartiment (102), ledit canal d'adduction (106, 126) étant ménagé en creux au sein dudit bord périphérique (107) de ladite face principale (104) correspondante,
- un deuxième orifice traversant (101, 121) situé à proximité du premier orifice traversant (108, 128), ledit deuxième orifice traversant (101, 121) étant également destiné à la circulation du fluide réactif (320),
la face principale (105) opposée à la face (104) logeant ladite région en creux, comportant une rainure (109, 129) ménagée en creux, ladite rainure (109, 129) étant apte à relier les premier (108, 128) et deuxième orifices traversants (101, 121),
les premiers orifices (108, 128) des plaques bipolaires coïncidant afin de former un collecteur commun,
***caractérisé* en ce que** les deuxièmes orifices (101, 121) des plaques bipolaires ne coincident pas.

2. Pile à combustible selon la revendication 1, ***caractérisée* en ce que** chaque plaque bipolaire présente un axe médian, le premier orifice traversant (108, 128) étant percé selon ledit axe médian.

3. Pile à combustible selon l'une des revendications précédentes, ***caractérisée* en ce que** les compartiments (102, 103) des plaques bipolaires couvrent respectivement chacune desdites faces principales (104, 105).

4. Pile à combustible selon l'une des revendications précédentes, ***caractérisée* en ce que** les premier (108, 128) et/ou deuxième orifice(s) traversant(s) (101, 121) présente(nt) une forme de cylindre à base circulaire, dont l'axe est perpendiculaire au plan défini par l'une des faces principales (104, 105).

5. Pile à combustible selon l'une des revendications précédentes, ***caractérisée* en ce que** chaque plaque comprend en outre un deuxième ensemble (559, 579 ; 659, 679) d'orifices traversants pour la circulation d'un deuxième fluide réactif, et un troisième ensemble (669, 689) d'orifices traversants pour la circulation d'un fluide de refroidissement.

6. Pile à combustible comprenant une superposition de cellules élémentaires selon l'une des revendications précédentes, ***caractérisée* :**
- **en ce que** lesdites plaques bipolaires (300, 330, 340) sont séparées deux à deux respectivement par un joint d'étanchéité (250 ; 350, 351, 352 ; 450, 451, 452) globalement plan, chacun desdits joints d'étanchéité (250 ; 350, 351, 352 ; 450, 451, 452) comprenant un électrolyte membranaire (260 ; 460-462) et des orifices traversants (251-253) au niveau du bord périphérique du joint d'étanchéité,
- et **en ce que** les orifices traversants (301, 331, 341) des plaques bipolaires superposées (300, 330, 340) et les orifices traversants (251-253) de tous les joints d'étanchéité (250 ; 350, 351, 352 ; 450, 451, 452) coïncident de manière à former un collecteur de fluide réactif (320) commun à toutes les cellules élémentaires.

7. Pile à combustible selon l'une quelconque des revendications précédentes, ***caractérisée* en ce que** les orifices traversants des plaques bipolaires superposées et les orifices traversants de tous les joints d'étanchéité coïncident de manière à former des deuxième et troisième collecteurs de fluide communs à toutes les cellules élémentaires.

## Patentansprüche

1. Brennstoffzelle mit einer Übereinanderanordnung von Elementarzellen, wobei die jeweiligen Elementarzellen eine Bipolarplatte (100) aufweisen, die wiederum Folgendes umfasst:
- eine erste durchgehende Öffnung (108, 128), die innerhalb eines ihrer Umfangsränder (107) angeordnet ist und für die Strömung eines reaktiven Fluids (320) bestimmt ist,
- eine anodische Kammer (103), die sich an einer der beiden Hauptflächen (105) der Platte erstreckt, und eine kathodische Kammer (102), die sich an der entgegengesetzten Hauptfläche (104) erstreckt, wobei mindestens eine der Kammern (102) ganz oder teilweise durch einen in Bezug auf die entsprechende Hauptfläche (104) vertieften Bereich gebildet ist, wobei der vertiefte Bereich mit der durchgehenden Öffnung (108, 128) über einen Zuführungskanal (106, 126) für reaktives Fluid in der Ebene der genannten Kammer (102) verbunden ist, wobei der Zuführungskanal (106, 126) als Vertiefung innerhalb des Umfangrandes (107) der genannten entsprechenden Hauptfläche (104) ausgebildet ist,
- eine zweite durchgehende Öffnung (101, 121), die in der Nähe der ersten durchgehenden Öffnung (108, 128) angeordnet ist, wobei die zweite durchgehende Öffnung (101, 121) ebenfalls für die Strömung von reaktivem Fluid (320) bestimmt ist,
wobei die Hauptfläche (105), die der Fläche (104) entgegengesetzt ist, in welcher der vertiefte Bereich angeordnet ist, eine als Vertiefung ausgebildete Nut (109, 129) aufweist, wobei die Nut (109, 129) geeignet ist, die erste (108, 128) und zweite durchgehende Öffnung (101, 121) zu verbinden,
wobei die ersten Öffnungen (108, 128) der bipolaren Platten übereinstimmen, um eine gemeinsamen Sammelkanal zu bilden,
**dadurch gekennzeichnet, dass** die zweiten Öffnungen (101, 121) der Bipolarplatten nicht übereinstimmen.

2. Brennstoffzelle nach Anspruch 1, **dadurch gekennzeichnet, dass** jede Bipolarplatte eine Mittelachse aufweist, wobei die erste durchgehende Öffnung (108, 128) an der Mittelachse durchgebrochen ist.

3. Brennstoffzelle nach einem der vorhergehenden Ansprüche, **dadurch gekennzeichnet, dass** die Kammern (102, 103) der Bipolarplatten jeweils die jeweiligen Hauptflächen (104, 105) abdecken.

4. Brennstoffzelle nach einem der vorhergehenden Ansprüche, **dadurch gekennzeichnet, dass** die erste (108, 128) und/oder die zweite durchgehende Öffnung (101, 121) die Form eines Zylinders mit kreisförmiger Grundfläche aufweisen, dessen Achse senkrecht zu der durch eine der Hauptflächen (104, 105) definierten Ebene ist.

5. Brennstoffzelle nach einem der vorhergehenden Ansprüche, **dadurch gekennzeichnet, dass** jede Platte zudem eine zweite Anordnung (559, 579; 659, 679) von durchgehenden Öffnungen für die Strömung eines zweiten reaktiven Fluids und eine dritte Anordnung (669, 689) von durchgehenden Öffnungen für die Strömung eines Kühlungsfluids aufweist.

6. Brennstoffzelle mit einer Übereinanderanordnung von Elementarzellen nach einem der vorhergehenden Ansprüche, **dadurch gekennzeichnet, dass**
- die Bipolarplatten (300, 330, 340) paarweise jeweils durch eine insgesamt flache Dichtung (250; 350, 351, 352; 450, 451, 452) getrennt sind, wobei die jeweiligen Dichtungen (250; 350, 351, 352; 450, 451, 452) einen Membranelektrolyt (260; 460-462) und durchgehende Öffnungen (251-253) in der Ebene des Umfangsrandes der Dichtung aufweisen,
- die durchgehenden Öffnungen (301, 331, 342) der übereinander angeordneten Bipolarplatten (300, 330, 340) und die durchgehenden Öffnungen (251-253) aller Dichtungen (250; 350, 351, 352; 450, 451, 452) so übereinstimmen, dass sie einen Sammelkanal für reaktives Fluid (320) bilden, der allen Elementarzellen gemeinsam ist.

7. Brennstoffzelle nach einem beliebigen der vorhergehenden Ansprüche, **dadurch gekennzeichnet, dass** die durchgehenden Öffnungen der übereinander angeordneten Bipolarplatten und die durchgehenden Öffnungen aller Dichtungen so übereinstimmen, dass sie zweite und dritte Sammelkanäle für Fluid bilden, die allen Elementarzellen gemeinsam sind.

## Claims

1. Fuel cell comprising a superposition of elementary cells, each elementary cell comprising a bipolar plate (100), each bipolar plate comprising:
- a first through-hole (108, 128), positioned within one of its peripheral edges (107), for circulating a reactive fluid (320),
- an anode compartment (103) extending at one of the two main faces (105) of said plate, and a cathode compartment (102) extending at the opposite main face (104), at least one of the said compartments (102) being formed completely or partially by a region recessed with respect to the corresponding main face (104), the said recessed region being connected to the through-hole (108, 128) via an intake channel (106, 126) for the flow of the reactive fluid into the said compartment (102), the said intake channel (106, 126) being recessed within the said peripheral edge (107) of the said corresponding main face (104),
- a second through-hole (101, 121) located near the first through-hole (108, 128), the said second through-hole (101, 121) being also intended for circulating the reactive fluid (320),
the main face (105) opposite the face (104) housing the said recessed region, comprising a recessed groove (109, 129), the said groove (109, 129) being suitable for connecting the first (108, 128) and second through-holes (101, 121) ;
the first through-holes (108, 128) of the bipolar plates coinciding in order to form a common collector ;
**characterized in that** the second through-holes (101, 121) of the bipolar plates do not coincide.

2. Fuel cell according to claim 1, **characterized in that** each bipolar plate has a median axis, the first through-hole (108, 128) being drilled along the said median axis.

3. Fuel cell according to either of the preceding claims, **characterized in that** the compartments (102, 103) of the bipolar plates respectively cover each of the said main faces (104, 105).

4. Fuel cell according to one of the preceding claims, **characterized in that** the first (108, 128) and/or second through-hole(s) (101, 121) has(have) a shape of a cylinder having a circular base, whereof the axis is perpendicular to the plane defined by one of the main faces (104, 105).

5. Fuel cell according to one of the preceding claims, **characterized in that** each bipolar plate further comprises a second set (559, 579; 659, 679) of through-holes for circulating a second reactive fluid, and a third set (669, 689) of through-holes for circulating a cooling fluid.

6. Fuel cell comprising according to one of the preceding claims, **characterized:**
- **in that** the said bipolar plates (300, 330, 340) are separated in pairs respectively by a generally planar seal (250; 350, 351, 352; 450, 451, 452), each of the said seals (250; 350, 351, 352; 450, 451, 452) comprising a membrane electrolyte (260; 460-462) and through-holes (251-253) at the peripheral edge of the seal,
- and **in that** the through-holes (301, 331, 341) of the superimposed bipolar plates (300, 330, 340) and the through-holes (251-253) of all the seals (250; 350, 351, 352; 450, 451, 452) coincide in order to form a reactive fluid collector (320) common to all the elementary cells.

7. Fuel cell according to one of the preceding claims, **characterized in that** the through-holes of the superimposed bipolar plates and the through-holes of all the seals coincide in order to form second and third fluid collectors common to all the elementary cells.
